# FASCICULE DE BREVET EUROPEEN

(11) **EP 0 546 963 B1**
(45) Date de publication et mention de la délivrance du brevet: **22.10.1997**
(21) Numéro de dépôt: 92420448.0
(22) Date de dépôt: 07.12.1992
(51) Int. Cl.: H02H 3/20, H04L 25/08

(54) **Système d'alimentation comportant un circuit de protection série**
Stromversorgungssystem mit Serien-Schutzschaltung
Power supply system comprising a series protection circuit

(30) Priorité: 10.12.1991 FR 9115673
(43) Date de publication de la demande: 16.06.1993
(73) Titulaire: SGS-THOMSON MICROELECTRONICS S.A., 94250 Gentilly (FR)
(72) Inventeur: Bremond, André, F-37270 Veretz (FR)
(74) Mandataire: de Beaumont, Michel

(56) Documents cités:
- FR-A- 2 509 924
- FR-A- 2 619 262

## Description

La présente invention concerne le domaine de la protection de composants reliés à une ligne d'alimentation et susceptibles d'être détériorés par des surtensions se produisant sur cette ligne d'alimentation.

On s'intéressera ici essentiellement au cas où le composant est un circuit comprenant des éléments actifs susceptibles d'être détériorés par une surtension, ce composant présentant entre ses bornes une impédance essentiellement résistive R, et étant normalement parcouru par un courant continu de valeur relativement élevée. Ce composant peut par exemple être une lampe ballast incluant un convertisseur interne alimenté en tension continue. Ce composant sera appelé ci-après charge pour faire ressortir le fait qu'il s'agit d'un composant normalement traversé par un courant relativement important.

Les circuits de protection classiques se partagent généralement en deux types : les circuits de protection série et les circuits de protection parallèle.

Un circuit de protection série tel que décrit dans FR-A- 2 619 262 est représenté schématiquement en figure 1. Ce circuit est disposé entre les bornes A et B d'une ligne et les bornes C et D d'une charge L. On considérera ci-après le cas où la tension entre la borne A et B est une tension continue ou alternative redressée, la borne A étant la borne au potentiel haut. Le circuit de protection série comprend, entre les bornes A et B, un circuit de détection 1 disposé pour détecter l'apparition d'une éventuelle surtension et, entre les bornes A et C (ou B et D), un commutateur S1, normalement fermé, et ouvert quand le détecteur 1 détecte une surtension.

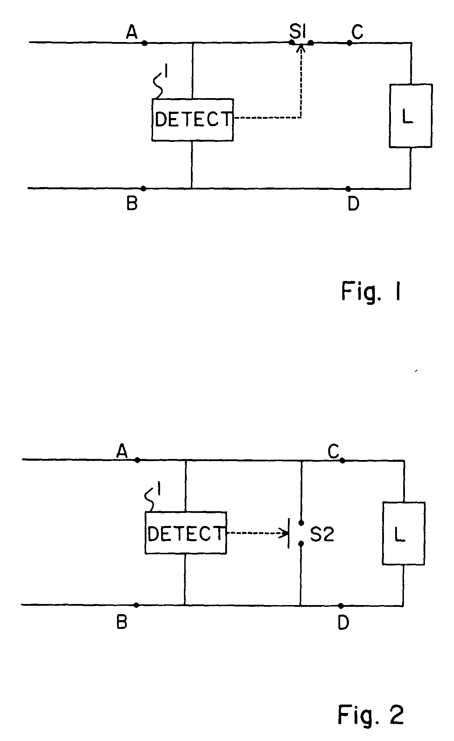

La figure 2 représente un circuit de protection parallèle qui comprend un commutateur S2 disposé entre les bornes C et D, ce commutateur S2 étant normalement ouvert et se fermant en réponse à la détection d'une surtension par le circuit 1.

De très nombreux modes de réalisation de circuit de protection de type série ou parallèle sont connus dans la technique et ne seront pas décrits en détail ici. On notera toutefois que, dans de très nombreuses réalisations pratiques, un même composant réalise les fonctions de commutation et de détection. En outre, dans les circuits de protection parallèle, on notera que le commutateur peut ou bien avoir réellement la fonction d'un commutateur comme cela est représenté en figure 2, ou bien avoir la fonction d'un écrêteur laissant passer les surtensions au-dessus d'un certain seuil de tension. On trouve aussi dans la technique des circuits utilisant simultanément des protections série et parallèle destinées par exemple les unes à fonctionner en cas de surtension à front de montée raide et les autres en cas de surtension à front de montée plus lent.

En pratique, jusqu'à ces dernières années, on a essentiellement utilisé des circuits de protection du type parallèle. Toutefois, ces circuits présentent l'inconvénient que, quand on veut éliminer des surcharges relativement importantes, ils doivent être capables de supporter de fortes énergies et donc qu'il faut prévoir des composants semiconducteurs de grande dimension capables de résister à des chocs thermiques importants. Ainsi, on a plutôt eu tendance ces dernières années à utiliser autant que possible des circuits de protection série.

Néanmoins, les circuits de protection série présentent également des inconvénients. En particulier, l'ouverture brutale du commutateur S1 en réponse à la détection d'une surtension risque de provoquer une surtension en retour encore plus importante sur le réseau, cette surtension étant égale à ℓ·dI/dt, où ℓ est l'inductance de ligne. Cet inconvénient se manifeste tout particulièrement si le courant nominal dans la charge est important.

Un objet de la présente invention est de pallier cet inconvénient, c'est-à-dire de prévoir un circuit de protection série évitant le renvoi d'une surtension sur le réseau en réponse à une surtension provenant du réseau.

Pour atteindre cet objet, la présente invention prévoit système d'alimentation comportant une charge ayant une résistance de valeur R relié à une ligne d'alimentation de polarité donnée, et un circuit de protection contre des surtensions, comprenant un détecteur de surtension aux bornes de la ligne, un premier interrupteur normalement fermé en série sur un conducteur de la ligne et commandé à l'ouverture par le détecteur, et un deuxième interrupteur en série avec une résistance de même valeur R, l'interrupteur et la résistance en série étant disposés entre les conducteurs de la ligne et le deuxième interrupteur étant commandé par le détecteur de façon complémentaire au premier interrupteur.

Selon un mode de réalisation de la présente invention, les premier et second interrupteurs sont réalisés sous forme de transistors bipolaires de type NPN, le collecteur du premier transistor étant relié à une borne de la charge et son émetteur à la borne correspondante de la ligne, l'émetteur du second transistor étant relié à la même borne de la ligne et son collecteur à l'autre borne de la ligne par l'intermédiaire de la résistance R, un transistor auxiliaire étant relié aux bornes émetteur-base du premier transistor, l'émetteur de ce transistor auxiliaire étant relié aux émetteurs des premier et deuxième transistors, les bases du deuxième transistor et du transistor auxiliaire étant reliées à l'autre borne de la ligne par l'intermédiaire d'une diode zener.

Ces objets, caractéristiques et avantages ainsi que d'autres de la présente invention seront exposés en détail dans la description suivante de modes de réalisation particuliers faite en relation avec les figures parmi lesquelles :
les figures 1 et 2 décrites précédemment illustrent des schémas classiques de circuit de protection série et parallèle, respectivement ;
la figure 3 représente de façon schématique un circuit de protection série selon la présente invention ; et
la figure 4 illustre un exemple de réalisation du circuit de la figure 3.

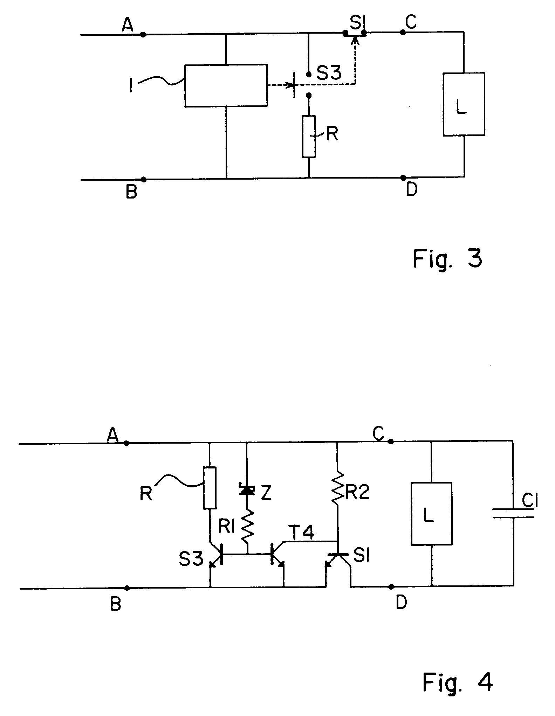

Le circuit de la figure 3, comme celui de la figure 1, comprend une charge L dont les bornes C et D sont connectées aux bornes A et B d'une ligne par l'intermédiaire d'un circuit de protection. Ce circuit de protection comprend comme celui de la figure 1 un circuit de détection de surtension 1 et un commutateur série S1. En outre, ce circuit comprend entre les bornes A et B la connexion en série d'un commutateur S3 et d'une résistance R. Le commutateur S1 est normalement fermé et le commutateur S3 est normalement ouvert. Ces deux commutateurs sont commandés de façon complémentaire par le détecteur 1, c'est-à-dire qu'en réponse à une surtension, on produit simultanément l'ouverture du commutateur S1 et la fermeture du commutateur S3. La résistance R placée en série avec le commutateur S3 est adaptée à la charge L sur laquelle est disposé le circuit de protection, c'est-à-dire que cette résistance a la même valeur que l'impédance résistive R de la charge L.

Ainsi, en réponse à une surtension, le commutateur S1 est ouvert mais il ne se produit pas de surtension en ℓ·dI/dt sur la ligne puisque la fermeture du commutateur S3 fait que la ligne voit la même résistance que celle qui existait précédemment. Par ailleurs, on notera que le courant dans le commutateur S3 est limité par la présence de l'impédance R et que la durée du passage de courant dans cette impédance R est très courte (fonction de la durée de la perturbation). Il n'est donc pas nécessaire de prévoir pour S3 un composant susceptible de dissiper une puissance importante. Dans le circuit de protection selon la présente invention, l'ensemble du commutateur S3 et de la résistance R n'a plus le rôle de protection contre les surtensions qu'avait le commutateur S2 de la figure 2, puisqu'il demeure aux bornes A et B une tension relativement importante. La branche S3-R a maintenant uniquement un rôle d'adaptation d'impédance et de suppression de surtension induite.

La figure 4 représente un exemple de réalisation du circuit de la figure 3. Le commutateur S1 réalisé par un transistor NPN est disposé sur la liaison BD et non sur la liaison AC comme dans le cas de la figure 3. Le commutateur S3 est réalisé par un autre transistor bipolaire NPN en série avec une résistance R.

Le circuit de déclenchement comprend une diode zener Z en série avec une résistance R1 entre la borne A et les bases du transistor S3 et d'un transistor supplémentaire T4. Le transistor S3 est relié par son collecteur à la résistance R et par son émetteur à la borne B. Le transistor T4 est relié par son émetteur à la borne B et par son collecteur à la base du transistor S1 qui est également reliée à la borne C par une résistance R2. L'émetteur du transistor S1 est relié à la borne B et son collecteur à la borne D. La diode zener Z a une tension d'avalanche supérieure à la tension nominale entre les bornes A et B.

En fonctionnement normal, la base du transistor S1 est polarisée par la résistance R2 et ce transistor est passant.

Quand la tension sur la borne A dépasse la tension normale, par suite d'un incident tel qu'un coup de foudre, la diode zener Z entre en avalanche et les transistors S3 et T4 deviennent passants. La mise en conduction du transistor T4 entraîne le blocage du transistor S1. Quand la surtension est interrompue, on revient à l'état initial.

L'ensemble des éléments constituant le circuit de protection selon la présente invention sera relativement simple à intégrer du fait qu'il comprend trois transistors NPN dont les émetteurs sont interconnectés. Ainsi, l'homme de l'art pourra fabriquer l'ensemble des éléments du circuit de protection, à l'exclusion bien entendu de la résistance R qui doit être adaptée à la charge L, sous forme d'un circuit intégré unique. En outre, dans certains types d'application où la charge L comprend elle-même un circuit intégré, les éléments du circuit de protection, toujours à l'exclusion de la résistance R, pourront être incorporés au circuit intégré de la charge L.

Bien entendu, la présente invention est susceptible de nombreuses variantes et modifications qui apparaîtront à l'homme de l'art dans le cadre défini par les revendications. Par exemple, on a représenté en figure 4 un condensateur C1 en parallèle sur la charge L, ce condensateur étant destiné à maintenir la tension sur cette charge pendant les périodes d'ouverture du commutateur S1.

## Revendications

1. Système d'alimentation comportant une charge (L) ayant une résistance de valeur R, une ligne d'alimentation de polarité donnée, et un circuit de protection contre des surtensions, comprenant:
un détecteur de surtension aux bornes de la ligne (1),
un premier interrupteur normalement fermé (S1) en série sur un conducteur de la ligne et commandé à l'ouverture par le détecteur, et
caractérisé en ce que le circuit de protection comprend en outre un deuxième interrupteur (S3) en série avec une résistance de même valeur R, l'interrupteur (S3) et la résistance R en série étant disposés entre les conducteurs (A,B) de la ligne et le deuxième interrupteur (S3) étant commandé par le détecteur de façon complémentaire au premier interrupteur (S1).

2. Système d'alimentation selon la revendication 1, caractérisé en ce que les premier et second interrupteurs sont réalisés sous forme de transistors bipolaires de type NPN, le collecteur du premier transistor (S1) étant relié à une borne de la charge et son émetteur à la borne correspondante de la ligne, l'émetteur du second transistor (S3) étant relié à la même borne de la ligne et son collecteur à l'autre borne de la ligne par l'intermédiaire de la résistance R, un transistor auxiliaire (T4) étant relié aux bornes émetteur-base du premier transistor, l'émetteur de ce transistor auxiliaire étant relié aux émetteurs des premier et deuxième transistors, les bases du deuxième transistor et du transistor auxiliaire étant reliées à l'autre borne de la ligne par l'intermédiaire d'une diode zener.

## Patentansprüche

1. Stromversorgungssystem mit einer Verbraucherlast (L), welche einen Widerstand vom Betrag R aufweist, einer Speise- bzw. Versorgungsleitung gegebener Polarität und einer Schutzschaltung gegen Überspannungen, welche umfaßt:
- einen Überspannungsdetektor an den Anschlüssen der Leitung (1),
- einen normalerweise geschlossenen ersten Schalter (S1), der in Reihe in einem Leiter der Leitung angeordnet ist und durch den Detektor in den öffnungs-Zustand gesteuert wird,
dadurch gekennzeichnet, daß die Schutzschaltung des weiteren einen zweiten Schalter (S3) in Reihe mit einem Widerstand vom gleichen Betrag R aufweist, wobei die Reihenschaltung aus dem Schalter (S3) und dem Widerstand R zwischen den Leitern (A, B) der Leitung angeordnet und der zweite Schalter (S3) durch den Detektor in zum ersten Schalter (S1) komplementärer Weise gesteuert wird.

2. Stromversorgungssystem nach Anspruch 1,
dadurch gekennzeichnet, daß der erste und der zweite Schalter in Form von bipolaren NPN-Transistoren ausgebildet sind, wobei der Kollektor des ersten Transistors (S1) mit einem Anschluß der Verbraucherlast und sein Emitter mit dem entsprechenden Anschluß der Leitung verbunden ist und der Emitter des zweiten Transistors (S3) mit dem gleichen Leitungsanschluß und sein Kollektor mit dem anderen Leitungsanschluß über den Widerstand R verbunden ist, und daß ein zusätzlicher oder Hilfstransistor (T4) mit den Emitter-Basis-Anschlüssen des ersten Transistors, der Emitter dieses zusätzlichen oder Hilfstransistors mit den Emittern des ersten und des zweiten Transistors und die Basisanschlüsse des zweiten Transistors und des zusätzlichen oder Hilfstransistors mit dem anderen Leitungsanschluß über eine Zener-Diode verbunden sind.

## Claims

1. A supply system including a load (L) having a resistance of a value R, a supply line with a predetermined polarity, and an overvoltage protection circuit, comprising:
an overvoltage detector (1) connected across the line,
a first normally on switch (S1), in series with a conductor of said line and controlled to the switching off state by said detector, and
characterized in that the protection circuit further comprises a second switch (S3), in series with a resistor having said value R, the switch (S3) and the resistor R in series being disposed between the line conductors (A, B) and the second switch (S3) being controlled by said detector in a complementary manner to said first switch (S1).

2. A supply system according to claim 1, characterized in that said first and second switches are NPN bipolar transistors, the collector of said first transistor (S1) being connected to a terminal of said load and its emitter to the corresponding line terminal, the emitter of said second transistor (S3) being connected to the same line terminal and its collector to the other line terminal through said resistor R, an auxiliary transistor (T4) being connected between the emitter and base terminal of said first transistor, the emitter of said auxiliary transistor being connected to the emitters of said first and second transistors, the bases of said second transistor and of said auxiliary transistor being connected to said other line terminal through a zener diode.
